# EUROPEAN PATENT APPLICATION

(11) **EP 1 143 332 A1**
(43) Date of publication of application: **10.10.2001**
(21) Application number: 00951925.7
(22) Date of filing: 10.08.2000
(51) Int. Cl.: G06F 9/06

(54) **SOFTWARE REWRITING METHOD AND SOFTWARE REWRITING DEVICE**

(30) Priority: 18.08.1999 JP 23146899
(71) Applicant: MATSUSHITA ELECTRIC INDUSTRIAL CO., LTD., Kadoma-shi, Osaka 571-8501 (JP)
(72) Inventor: ISOGAI, Isao, Yokosuka-shi, Kanagawa 239-0843 (JP)
(74) Representative: Grünecker, Kinkeldey, Stockmair & Schwanhäusser Anwaltssozietät
(86) International application number: JP0005351
(87) International publication number: WO0113219

(57) **Abstract**

A normal processing section 102 expands a program stored in a software storage 108 to an execution block storage 105 on a block unit basis to be executed, a rewrite block storage 106 temporarily stores rewriting blocks sent from a transfer section 109, a rewrite table 107 has an item indicative of execution states of the rewriting blocks. A rewrite processing section 103 discriminates unexecuted blocks in software by referring to the rewrite table 107, and rewrites unexecuted blocks of the program stored in the software storage 108 to the rewriting blocks stored in the rewrite block storage 106.

## Description

### Technical Art

The present invention relates to a software rewriting method and a software rewriting apparatus.

### Background Art

A conventional software rewriting method includes for example a method (1) for carrying out rewriting when software necessary for rewriting (hereinafter referred to as "old software") is not in execution and a method (2) for temporarily stopping execution forcibly during execution of old software.

In the method (1), for example, a terminal dedicated to software rewriting is connected to an apparatus on which old software operates and power source of the apparatus is once turned off and then turned on. At this time, when it is detected that new software to be rewritten (hereinafter referred to as "new software") is sent to the dedicated terminal, software for rewriting software provided in the apparatus stops the operation of old software and rewrites old software to new software in a rewriting mode different from a normal processing mode. After that, the dedicated terminal is disconnected from the apparatus and power source of the apparatus is turned off/on, whereby new software is executed in the apparatus.

In the method (2), for example, in the normal processing a central processing unit (hereinafter referred to as "CPU") in the apparatus that old software operates temporarily stops execution of old software by an interrupt and the like and performs rewriting, and releases the stopping state after rewriting, thereby executing new software.

However, the conventional method (1) has a problem in which the apparatus cannot be used for the original purpose since the apparatus cannot carry out the normal processing during the rewriting. Also, the conventional method (2) has a problem in which the use of the apparatus for the original purpose is not disturbed but the normal processing of the apparatus is temporarily stopped.

### Disclosure of Invention

It is an object of the present invention is to provide a software rewriting method and a software rewriting apparatus capable of rewriting software without stopping execution of the software during execution of the software.

The inventor of the present invention considered that the reason why rewriting is performed when the software is not executed or when execution of the software is stopped lies in the point that the rewriting is executed in accordance with an execution state of the software. The inventor found out that the software can be divided into executed parts and unexecuted parts, and achieved the present invention.

In order to attain the above object, in the present invention, parts of the software are detected which are not executed, and the parts are rewritten sequentially.

### Brief Description of Drawings

FIG. 1 is a general block diagram illustrating a schematic configuration of a software rewriting apparatus according to a first embodiment of the present invention;
FIG. 2 is a view explaining a software rewriting operation according to the first embodiment of the present invention; and
FIG. 3 is a view explaining a software rewriting operation according to a second embodiment of the present invention.

### Best Mode for Carrying Out the Invention

Embodiments of the present invention will be specifically explained with reference to the drawings attached hereto.

### (First embodiment)

In the software rewriting method and the software rewriting apparatus according to the present embodiment, a plurality of processing blocks to be subjected to rewriting in software is divided into blocks in execution and unexecuted blocks, and the unexecuted blocks are rewritten.

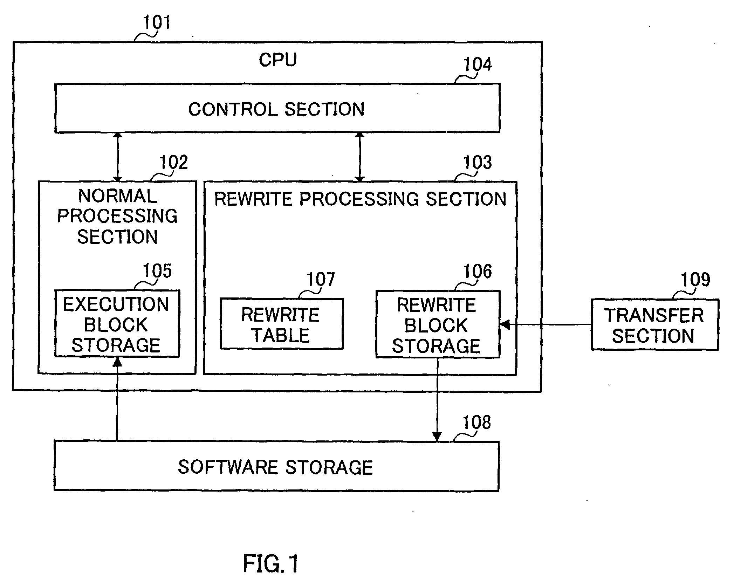

The following will explain the software rewriting method and the software rewriting apparatus according to the first embodiment of the present invention. FIG. 1 is a general block diagram illustrating a schematic configuration of the software rewriting apparatus according to the first embodiment of the present invention.

In a CPU 101, a normal processing section 102, a rewrite processing section 103, and a control section 104 are operated.

The normal processing section 102 has an execution block storage 105. The normal processing section 102 extracts software necessary for processing that is currently performed from various kinds of software stored in a software storage 108, and expands it in the execution block storage 105 to execute normal processing. It is noted that normal processing which is herein referred indicates all processing except software rewrite processing performed in the CPU 101.

The rewrite processing section 103 has a rewrite block storage 106 and a rewrite table 107. The rewrite processing section 103 updates old software stored in the software storage 108 by new software sent from a transfer section 109 in accordance with an instruction from the control section 104, thereby rewriting old software to new software.

The rewrite block storage 106 stores a new program sent from the transfer section 109 until rewrite processing is ended.

The rewrite table 107 is a table, which is used when the rewrite processing section 103 rewrites software, and a table for managing a software execution state. The configuration of the rewrite table 107 will be described later.

The control section 104 monitors a degree of load of processing to be executed by the CPU 101. The control section 104 instructs the rewrite processing section 103 to perform rewrite processing when an amount of processing executed at the normal processing section 102 is reduced and the load of processing to be executed by the CPU 101 becomes low, so that the CPU 101 can have a space where processing other than the normal processing can be carried out. The control section 104 also instructs the rewrite processing section 103 to stop rewrite processing when the amount of processing executed by the normal processing section 102 is increased. Thus, since the software rewriting apparatus executes rewrite processing when the degree of load of processing executed by the CPU becomes low, it is possible to rewrite software without exerting an influence upon normal processing executed by the CPU.

The software storage 108 stores various kinds of software executed by the normal processing section 102.

The transfer section 109 converts new software transmitted from an external of the apparatus via cable or radio waves to data format that can be handled by the CPU 101, and transfers it to the rewrite block storage 106.

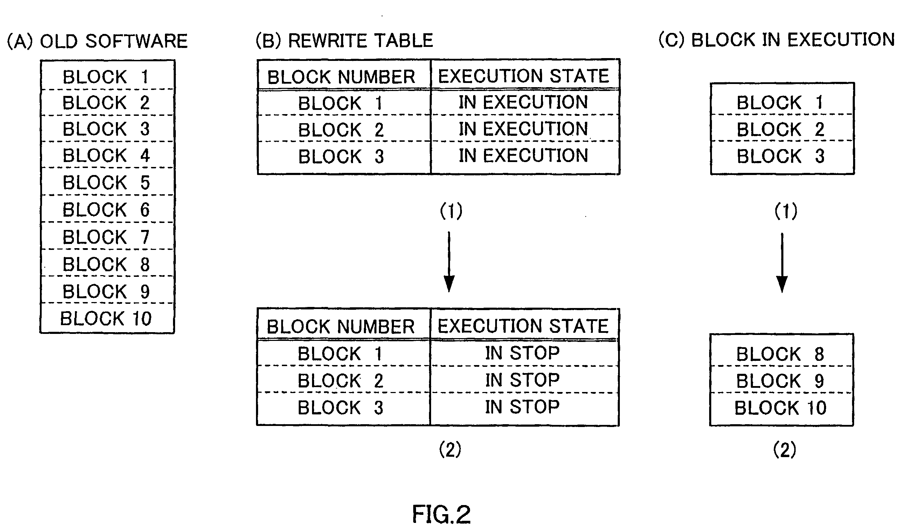

An explanation will be next given of an operation of the software rewriting apparatus having the above configuration with reference to FIG. 2. FIG. 2 is a view explaining a software rewriting operation according to the first embodiment of the present invention.

Regarding various kinds of software stored in the software storage 108, the overall software is divided to a plurality of processing blocks on a processing unit basis. Software is expanded in the execution block storage 105 or rewritten by the rewrite processing section 103 for each processing block unit.

Now, it is herein assumed that the overall old software to be rewritten is divided to 10 blocks as shown in FIG. 2 (A).

Normally, in rewriting software, the overall software is not rewritten and only the block (hereinafter referred to as "old block"), which is necessary to be rewritten, is rewritten to improve a reduction in rewriting time.

A new block (hereinafter referred to as "new block") to be rewritten that is sent to the rewrite block storage 106 from the transfer section 109 is stored in the rewrite block storage 106 until the rewrite processing is ended.

The rewrite processing section 103 generates the rewrite table 107 as illustrated in FIG. 2(B) when detecting that the new blocks are sent to the rewrite block storage 106. The rewrite table is a table that has an item indicative of block numbers of new blocks and an item indicative of execution states as to whether or not the old blocks corresponding to the new blocks are expanded in the currently execution block storage 105 and they are in execution.

Now, it is herein assumed that blocks 1 to 3 as new blocks are transferred to the rewrite block storage 106. The item indicative of block numbers of new blocks is filled with blocks 1 to 3 as shown in FIG. 2(B). It is noted that the item indicative of execution state has not been filled yet at this stage.

When the amount of processing executed at the normal processing section 102 is reduced and the load of processing executed by the CPU 101 becomes low, the rewrite processing section 103 is instructed to carry out rewrite processing by the control section 104.

Since the control section 104 monitors blocks being expanded in the execution block storage 105 to be executed, the control section 104 instructs the rewrite processing section 103 to carry out rewrite processing, and at the same time, notifies the rewrite processing section 103 of the block numbers, which have been expanded in the currently execution block storage 105 and which are in execution. Additionally, in the execution block storage 105, a plurality of blocks necessary for processing currently executed at the normal processing section 102 is combined and expanded.

Now, it is herein assumed that blocks, which have been expanded in the execution block storage 105 and which are in execution, are old blocks 1 to 3 as illustrated in FIG. 2(C)(1) in the old software of FIG. 2(A).

Next, the rewrite processing section 103 compares the block numbers notified from the control section 104 with block numbers stored in the rewrite table 107, and fills the item indicative of execution state. Since the notified block numbers are 1 to 3 and the block numbers stored in the rewrite table 107 are also 1 to 3, the rewrite processing section 103 fills the item of all execution states of the rewrite table 107 with "in execution" as illustrated in FIG. 2 (B) (1).

Then, the rewrite processing section 103 extracts blocks, which are not currently executed, among from new blocks stored in the rewrite block storage 106 by referring to the rewrite table 107, and rewrites the old blocks stored in the software storage 108 to new blocks. Now, since all blocks 1 to 3 are in execution as illustrated in FIG. 2 (B) (1), the rewriting is not carried out.

After that, when the amount of processing executed at the normal processing section 102 is reduced again, the rewrite processing section 103 is instructed to carry out rewrite processing by the control section 104. At this time, it is assumed that blocks, which have been expanded in the execution block storage 105 and which are in execution, are blocks 8 to 10 as illustrated in FIG. 2(C)(2).

Next, the rewrite processing section 103 fills the item indicative of execution state by the same operation as mentioned above. Since the notified block numbers are 8 to 10 and the block numbers stored in the rewrite table are 1 to 3, the rewrite processing section 103 fills the item of all execution states of the rewrite table 107 with "in stop" indicative of non-executing as illustrated in FIG. 2 (B) (2).

Then, the rewrite processing section 103 extracts blocks 1 to 3, which are not currently executing, from the rewrite block storage 106 by referring to the rewrite table 107, and rewrites the old blocks 1 to 3 stored in the software storage 108 to new blocks 1 to 3.

After rewriting, the rewrite processing section 103 erases the blocks stored in the rewrite block storage 106 and the content of the rewrite table 107.

This embodiment shows the configuration in which the control section 104 always monitors the degree of load of CPU 101, and when the load of processing executed by the CPU 101 becomes low, instructs the rewrite processing section 103 to carry out rewrite processing. However, the following configuration may be provided. Namely, when new blocks are transferred to the rewrite block storage 106 and a rewrite request sent from the rewrite processing section 103 is transmitted to the control section 104, the control section 104 surveys the degree of load of CPU 101. Then, when the load of processing executed by the CPU 101 is low, the control section 104 may instruct the rewrite processing section 103 to carry out rewrite processing.

Thus, according to the software rewriting method and the software rewriting apparatus according to this embodiment, the plurality of processing blocks to be rewritten in software is divided into blocks in execution and blocks in stop and rewrites the blocks in stop, so that the software can be rewritten during normal processing without stopping execution of the software.

### (Second embodiment)

The difference between the software rewriting apparatus of this embodiment and that of the first embodiment is that the rewrite table has an item indicative of a rewriting state.

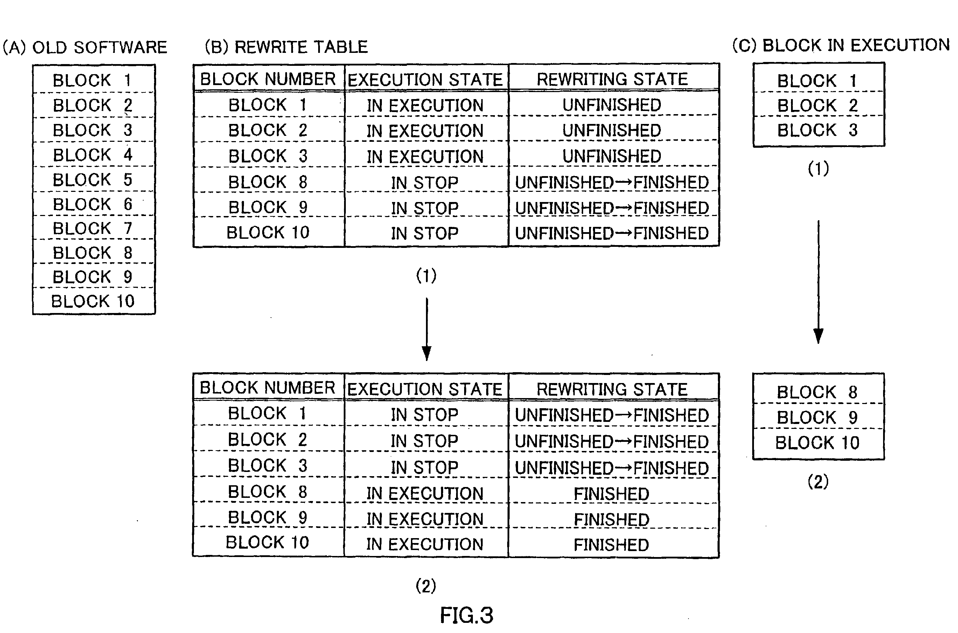

The following will explain the software rewriting method and the software rewriting apparatus according to the second embodiment with reference to FIG.1 and FIG. 3. FIG. 3 is a view explaining a software rewriting operation according to the second embodiment of the present invention.

Since the configuration and operation of the software rewriting apparatus of this embodiment are substantially the same as those of the first embodiment, the specific explanation of the same configuration and operation is omitted.

The rewrite processing section 103 generates the rewrite table 107 as illustrated in FIG. 3(B) when detecting that a new block is sent to the rewrite block storage 106. This rewrite table is a table in which an item indicative of rewriting state is added to the rewrite table of the first embodiment.

Now, it is herein assumed that blocks 1 to 3 and 8 to 10 as new blocks are transferred to the rewrite block storage 106. The item of block number of the rewrite table 107 is filled with blocks 1 to 3 and 8 to 10 as shown in FIG. 3(B). At the time of filling blocks 1 to 3 and 8 to 10 in the rewrite table, all rewriting states are filled as "unfinished."

It is noted that the item of execution state has not been filled yet at this stage.

When the amount of processing executed at the normal processing section 102 is reduced and the load of processing to be executed by the CPU 101 becomes low , the rewrite processing section 103 is instructed to carry out rewrite processing and is notified of block numbers, which have been expanded in the execution block storage 105 and which are in execution, by the control section 104.

Now, it is herein assumed that blocks, which have been expanded in the execution block storage 105 and which are in execution, are blocks 1 to 3 similar to the first embodiment as illustrated in FIG. 3(C) (1) in the old software of FIG. 3(A).

Next, the rewrite processing section 103 compares the block numbers notified from the control section 104 with the block numbers stored in the rewrite table 107, and fills the item indicative of execution state. The notified block numbers are 1 to 3 and the block numbers stored in the rewrite table 107 are 1 to 3 and 8 to 10. For this reason, the rewrite processing section 103 fills the item indicative of execution state of the rewrite table 107 with "in execution" relating to block numbers 1 to 3 and "in stop" relating to block numbers 8 to 10 as illustrated in FIG. 3(B)(1).

After that, the rewrite processing section 103 extracts blocks, which are not currently executing and which have not been finished rewriting, among new blocks stored in the rewrite block storage 106 from the rewrite block storage 106, and rewrites the old blocks stored in the software storage 108 to new blocks by referring to the rewrite table 107.

Now, it is herein assumed that rewriting of all new blocks is "unfinished", blocks 1 to 3 are "in execution", and blocks 8 to 10 are "in stop." Therefore, the rewrite processing section 103 extracts new blocks 8 to 10 from the rewrite block storage 106 and rewrites old blocks 8 to 10 stored in the software storage 108 to new blocks 8 to 10.

It is noted that the rewriting state of blocks 8 to 10 illustrated in FIG. 3(B)(1) remains "unfinished" until the rewrite processing section 103 finishes rewriting blocks 8 to 10.

Then, the rewrite processing section 103 changes the rewriting state of blocks 8 to 10 of the rewrite table 107 from "unfinished" to "finished" as illustrated in FIG. 3(B)(1) when the rewrite processing section 103 finishes rewriting blocks 8 to 10.

Next, when the amount of processing executed at the normal processing section 102 is increased, the control section 104 instructs the rewrite processing section 103 to temporarily stop rewrite processing. The rewrite processing section 103 temporarily stops rewrite processing in accordance with this instruction. At this time, the content of the rewriting state of the rewrite table 107 shows "unfinished" in connection with blocks 1 to 3 and "finished" in connection with blocks 8 to 10 as illustrated in FIG. 3 (B)(1). Therefore, when the rewrite processing section 103 receives the instruction of rewrite processing from the control section 104 again, the rewrite processing section 103 is able to judge that the rewrite processing section 103 does not have to rewrite blocks 8 to 10 , which have been already rewritten, and rewrites only blocks 1 to 3, which have not been rewritten.

Then, when the amount of processing executed at the normal processing section 102 is reduced again, the rewrite processing section 103 is instructed to carry out rewrite processing by the control section 104. At this time, it is assumed that blocks, which have been expanded in the execution block storage 105 and which are in execution, are blocks 8 to 10 as illustrated in FIG. 3(C) (2), similar to the first embodiment.

Next, the rewrite processing section 103 fills the item indicative of execution state with "in stop" relating to blocks 1 to 3 and "in execution" relating to blocks 8 to 10 as illustrated in FIG. 3(B)(2) since the notified block numbers are 8 to 10 .

After that, the rewrite processing section 103 extracts blocks 1 to 3, which are not currently executing and which have been "unfinished" rewriting, from the rewrite block storage 106 by referring to the rewrite table 107, and rewrites the old blocks 1 to 3 stored in the software storage 108 to new blocks 1 to 3. After rewriting the blocks 1 to 3, the rewrite processing section 103 changes the rewriting state of blocks 1 to 3 of the rewrite table 107 from "unfinished" to "finished" as illustrated in FIG. 3(B)(2).

Then, the rewrite processing section 103 erases the blocks stored in the rewrite block storage 106 and the content of the rewrite table 107 when confirming that all rewriting states of the rewrite table 107 are changed to "finished."

According to the software rewriting method and the software rewriting apparatus of this embodiment, since the rewrite table has the item indicative of the rewriting state, the plurality of processing blocks to be rewritten in software is divided into blocks finished rewriting and blocks unfinished rewriting, and only the blocks unfinished rewriting can be subjected to rewriting. This eliminates the need for carrying out the rewriting by one rewrite processing, and makes it possible to divide the rewriting to a plurality of times when there are a lot of blocks to be written. Moreover, regarding the blocks finished rewriting, since it is unnecessary to carry out the rewriting again, the load of rewrite processing can be reduced and the rewrite processing can be efficiently carried out.

The software rewriting apparatus according to the first and second embodiments can be applied to a communication terminal apparatus such as a mobile station apparatus in the radio communication system. In such an application, for example, if the communication terminal apparatus is the mobile station apparatus, software is transmitted to the mobile station apparatus from the base station apparatus via radio waves using a control channel on which a control signal is always transmitted. Then, the mobile station apparatus can carry out the rewriting of software at the time when the load of CPU processing is relatively low, for example, a standby status. In the conventional case, when the rewriting of software is needed, the mobile station apparatus must be collected to carry out the rewriting of software or a user of the mobile station apparatus must visit the store where the terminal for rewriting is provided to carry out the rewriting. Therefore, the mobile station apparatus cannot be used in communications during the rewriting. According to the present invention, the rewriting of software can be carried out in the normal use status of the mobile station apparatus without having the user of the mobile station apparatus recognize that the rewriting of software has been carried out.

The software rewriting apparatus of the first and second embodiments can be applied to a communication terminal apparatus connected via cable, a computer apparatus connected via cable, and a computer apparatus connected via radio waves.

As explained above, according to the present invention, software can be rewritten without stopping execution of software during execution of software.

This application is based on the Japanese Patent Application No. HEI 11-231468 filed on August 18, 1999, entire content of which is expressly incorporated by reference herein.

### Industrial Applicability

The present invention can be applied to a communication terminal apparatus such as a mobile station apparatus in a radio communication system. Also, the present invention can be applied to a communication terminal apparatus connected via cable, a computer apparatus connected via cable, and a computer apparatus connected via radio waves.

## Claims

1. A software rewriting method that detects unexecuted parts of software to be rewritten during execution of the software to be rewritten and rewrites the unexecuted parts sequentially.

2. The software rewriting method according to claim 1, wherein the software to be rewritten is software having one block or software, which is divided into a plurality of blocks, and the respective blocks are classified into executing blocks and unexecuted blocks, and the unexecuted blocks are sequentially rewritten.

3. The software rewriting method according to claim 2, wherein rewriting blocks are temporarily stored in a memory, the rewriting blocks are compared with the executing blocks, and when blocks corresponding to the rewriting blocks are unexecuted, the corresponding blocks of the software to be rewritten are sequentially rewritten to the rewriting blocks.

4. The software rewriting method according to claim 3, wherein it is determined as to whether or not the corresponding blocks of the software to be rewritten are finished rewriting, and no rewriting of the corresponding blocks, which have been rewritten, are carried out again.

5. A software rewriting apparatus comprising:
a software storage for storing software having one block or a plurality of divided blocks;
a processor for expanding the blocks to be executed;
a block storage for temporarily storing rewriting blocks;
a discriminator for comparing the rewriting blocks with blocks executed by the processor to discriminate execution states of the blocks corresponding to the rewriting blocks; and
a rewriter for performing rewrite processing in which the corresponding blocks stored in the software storage are sequentially rewritten to the rewriting blocks in accordance with a discrimination result.

6. The software rewriting apparatus according to claim 5, wherein the discriminator comprises a table including configuration items having an item indicative of block numbers of the rewriting blocks and an item indicative of execution states of the blocks corresponding to the rewriting blocks, and the rewriter performs rewrite processing with reference to the table.

7. The software rewriting apparatus according to claim 6, wherein the table including a configuration item having an item indicative of rewriting states of the blocks corresponding to the rewriting blocks.

8. The software rewriting apparatus according to claim 5, further comprising a controller for surveying a degree of load of processing executed by a CPU, and instructing the rewriter to carry out rewrite processing when the degree of load becomes low.

9. The software rewriting apparatus according to claim 8, wherein the controller surveys the degree of load of processing executed by the CPU in response to a rewrite request sent from the rewriter.

10. A communication terminal apparatus having a software rewriting apparatus, said software rewriting apparatus comprising:
a software storage for storing software having one block or a plurality of divided blocks;
a processor for expanding the blocks to be executed;
a block storage for temporarily storing rewriting blocks;
a discriminator for comparing the rewriting blocks with blocks executed by the processor to discriminate execution states of the blocks corresponding to the rewriting blocks; and
a rewriter for performing rewrite processing in which the corresponding blocks stored in the software storage are sequentially rewritten to the rewriting blocks in accordance with a discrimination result.
